# EUROPEAN PATENT SPECIFICATION

(11) **EP 3 061 960 B1**
(45) Date of publication and mention of the grant of the patent: **14.06.2017**
(21) Application number: 16156913.2
(22) Date of filing: 23.02.2016
(51) Int. Cl.: F02F 3/10, F16J 9/26

(54) **INTERNAL COMBUSTION ENGINE FOR STRADDLED VEHICLE, AND STRADDLED VEHICLE**
VERBRENNUNGSMOTOR FÜR GRÄTSCHSITZFAHRZEUG UND GRÄTSCHSITZFAHRZEUG
MOTEUR À COMBUSTION INTERNE POUR VÉHICULE À CALIFOURCHON, ET VÉHICULE À CALIFOURCHON

(30) Priority: 27.02.2015 JP 2015037771
(43) Date of publication of application: 31.08.2016
(73) Proprietor: Yamaha Hatsudoki Kabushiki Kaisha, Shizuoka-ken Shizuoka 438-8501 (JP)
(72) Inventor: SATO, Tatsuhiko, Iwata-shi, Shizuoka 438-8501 (JP); KURITA, Hirotaka, Iwata-shi, Shizuoka 438-8501 (JP); DOI, Kosuke, Iwata-shi, Shizuoka 438-8501 (JP)
(74) Representative: Stöckeler, Ferdinand

(56) References cited:
- JP-A- 2000 120 870
- JP-A- 2009 068 390

## Description

### BACKGROUND

### 1. Technical Field:

The present application relates to an internal combustion engine for a straddled vehicle, and also to a straddled vehicle.

### 2 . Description of the Related Art:

As is well known, an internal combustion engine includes a combustion chamber in which fuel is combusted (exploded). The combustion chamber is demarcated by a cylinder wall forming a cylinder bore, a piston accommodated in the cylinder bore, and a cylinder head closing an end of the cylinder bore.

Pistons with a resin layer on a slidable portion of the skirt are known for example from JP 2009 068390.

The piston includes a piston head that receives an explosive pressure caused by combustion gas generated in the combustion chamber, and a piston skirt that extends in a cylinder axial direction from an outer circumference of the piston head and is slidable against the cylinder wall. The piston also includes a piston ring attached to the outer circumference of the piston head.

The piston ring is attached so as to be in close contact with a surface of the cylinder wall in order to increase the air-tightness of the combustion chamber or to remove excessive oil attached to the surface of the cylinder wall.

According to a conventionally known technology for preventing the cylinder wall from being scuffed by the piston ring, a diamond-like carbon layer is provided on the outer circumference of the piston ring (e.g., Japanese Laid-Open Patent Publication No. 2000-120870).

Heat which the piston head receives from the combustion gas is released toward the cylinder wall from the piston ring or the piston skirt.

### SUMMARY

However, it was recognized that in the case where the diamond-like carbon layer is provided on the outer circumference of the piston ring, the heat is not easily released toward the cylinder wall from the piston ring. Therefore, immediately after the internal combustion engine is started, the temperature difference between the piston head directly exposed to the combustion gas and the piston skirt located away from the combustion gas is made large. In this state, the amount of deformation of the piston skirt is made smaller than that of the piston head. As a result, the piston is not put into an ideal shape that is designed with an assumption that normal driving is performed. Thus, the gap between the piston skirt and the cylinder wall does not have an appropriate size designed with an assumption that normal driving is performed.

In the case where the gap between the piston skirt and the cylinder wall does not have an appropriate size, the piston skirt does not sufficiently support the piston head while the piston makes a reciprocal motion in the cylinder bore. This may cause the piston to collide against the cylinder wall repeatedly to make large noise. In addition, strong collision of the piston against the cylinder wall may cause abrasion or cohesion (seizure, sticking) to the piston and the cylinder wall. Especially, when the vehicle starts running soon after the start of the internal combustion engine without warming-up (i.e., without sufficiently raising the temperature of the internal combustion engine), the above-described problem of noise, or abrasion or cohesion of the piston and the cylinder wall, is likely to occur.

The present invention, made in light of the above-described problem, has an object of suppressing a problem caused to an internal combustion engine, including a diamond-like carbon layer provided on an outer circumference of a piston ring, due to a gap between a piston skirt and a cylinder wall not having an appropriate size.

An internal combustion engine for a straddled vehicle in an embodiment according to the present invention includes a cylinder including a cylinder wall demarcating a cylinder bore; a piston accommodated in the cylinder bore, the piston reciprocally movable in a first direction and in a second direction opposite to the first direction, the first direction and the second direction being parallel to a cylinder axial line; and a cylinder head provided at an end, of the cylinder bore, toward which the first direction is directed, the cylinder head demarcating a combustion chamber together with the cylinder wall and the piston. The piston includes a piston head demarcating an end, of the combustion chamber, toward which the second direction is directed; a piston ring attached to an outer circumference of the piston head, the piston ring including an outer circumference coming into contact with the cylinder wall to transmit heat of the piston to the cylinder wall; and a piston skirt including a slidable portion slidable against the cylinder wall, the piston skirt extending in the second direction along the cylinder wall from the outer circumference of the piston head. The piston ring includes a diamond-like carbon layer on the outer circumference thereof; and the slidable portion of the piston skirt includes a resin layer in at least a part thereof, the resin layer preventing the heat of the piston from being transmitted from the piston skirt to the cylinder wall.

In an embodiment, the cylinder head includes an intake port through which fuel is introduced into the combustion chamber and an exhaust port through which exhaust gas is discharged from the combustion chamber; the piston skirt includes a fist skirt portion and a second skirt portion located so as to have the cylinder axial line therebetween in a diametrical direction; the first skirt portion includes the resin layer and overlaps the intake port at least partially as seen in the first direction; the second skirt portion includes the resin layer and overlaps the exhaust port at least partially as seen in the first direction; and the resin layer has a larger area size in the first skirt portion than in the second skirt portion.

In an embodiment, the resin layer is provided in substantially the entirety of the slidable portion.

In an embodiment, length L of the piston skirt in the second direction and diameter D of the cylinder bore fulfill the relationship of L/D ≥ 0.3.

In an embodiment, the resin layer has a thickness of 15 µm or greater.

A straddled vehicle in an embodiment according to the present invention includes the internal combustion engine having any of the above-described structures.

Hereinafter, functions and effects of the present invention will be described.

In an internal combustion engine in an embodiment according to the present invention, the piston ring has the diamond-like carbon layer on the outer circumference thereof. Therefore, the cylinder wall is prevented from being scuffed by the piston ring. Also in the internal combustion engine in an embodiment according to the present invention, the slidable portion of the piston skirt includes the resin layer in at least a part thereof. Therefore, the heat transmission from the piston skirt to the cylinder wall is prevented by the resin layer. Thus, the heat of the piston (heat of the piston skirt) is not easily transmitted to the cylinder wall and is likely to stay in the piston skirt (namely, the heat preservability of the piston skirt is raised). This causes the temperature of the piston skirt to be raised more quickly than in the case where the slidable portion does not include the resin layer. This results in a smaller temperature difference between the piston head and the piston skirt. The temperature distribution in the piston is made close to the temperature distribution at the time of normal driving, relatively quickly after the internal combustion engine is started. Consequently, the gap between the piston skirt and the cylinder wall is made to have an appropriate size, relatively quickly after the internal combustion engine is started. This allows noise, generated immediately after the internal combustion engine is started, to be suppressed quickly, and also prevents abrasion or cohesion of the piston and the cylinder wall.

Typically, the piston skirt includes a first skirt portion and a second skirt portion located so as to have the cylinder axial line therebetween in a diametrical direction. The first skirt portion includes the resin layer and overlaps the intake port at least partially as seen in the first direction (parallel to the cylinder axial line and directed from the side of a crankcase toward the side of the cylinder head). The second skirt portion includes the resin layer and overlaps the exhaust port at least partially as seen in the first direction. In the cylinder, immediately after the internal combustion engine is started, the intake port side is likely to be lower in the temperature than the exhaust port side. As a result, in the case where the resin layer has the same area size in the first skirt portion as in the second skirt portion, the heat of the piston easily escapes from the first skirt portion. By contrast, in the case where the resin layer has a larger area size in the first skirt portion than in the second skirt portion, the heat of the piston is preserved more uniformly in a circumferential direction of the piston.

The resin layer may be provided in substantially the entirety of the slidable portion of the piston skirt. From the point of view of further raising the heat preservability of the piston skirt, it is preferable that the resin layer is provided in substantially the entirety of the slidable portion.

The internal combustion engine in an embodiment according to the present invention is preferably usable for a straddled vehicle, and especially preferably usable for a scooter-type or underbone-type straddled vehicle, which often starts running immediately after the internal combustion engine is started. In the case where the internal combustion engine in an embodiment according to the present invention is used, the effect of suppressing the generation of the noise, or abrasion or cohesion of the piston and the cylinder wall, is conspicuously provided.

In the case where length L of the piston skirt along the second direction (parallel to the cylinder axial line and directed from the side of the cylinder head toward the side of the crankcase) and diameter D of the cylinder bore fulfill the relationship of L/D ≥ 0.3, the piston head is supported relatively easily. This further stabilizes the posture of the piston head. However, as the length L of the piston head is longer (i.e., as L/D is larger), a tip portion of the piston skirt is farther from the combustion gas. This increases the temperature difference between the piston head and the piston skirt. When the length L of the piston skirt is long, the heat releasing area size (size of the area in which the piston skirt and the cylinder wall contact each other) is large, and heat is easily released from the piston skirt. Therefore, immediately after the internal combustion engine is started, the temperature of the piston skirt is not easily raised. For this reason, in an internal combustion engine which fulfills the relationship of L/D ≥ 0 .3, a problem caused by the gap between the piston skirt and the cylinder wall not having an appropriate size is considered to easily occur (or to be conspicuous). Therefore, an embodiment of the present invention provides large significance when being applied to an internal combustion engine which fulfills the relationship of L/D ≥ 0.3. The internal combustion engine in an embodiment according to the present invention, even though fulfilling the relationship of L/D ≥ 0.3 (i. e. , even though the length L of the piston skirt is relatively long), sufficiently preserves the heat of the piston skirt. Therefore, the temperature distribution in the piston is made close to the temperature distribution at the time of normal driving more quickly. This allows noise, generated immediately after the internal combustion engine is started, to be suppressed quickly, and also prevents deformation wear or cohesion of the piston and the cylinder.

From the point of view of sufficiently raising the heat preservability of the piston skirt, the thickness of the resin layer is preferably 15 µm or greater. However, in the case where the thickness of the resin layer exceeds 30 µm, it may be difficult to form the resin layer by a simple method. Therefore, from the point of view of forming the resin layer easily, the thickness of the resin layer is preferably 30 µm or less.

An embodiment of present invention suppresses a problem caused to an internal combustion engine, including a diamond-like carbon layer provided on an outer circumference of a piston ring, due to a gap between a piston skirt and a cylinder wall not having an appropriate size.

### BRIEF DESCRIPTION OF THE DRAWINGS

[FIG. **1**] FIG. **1** is a cross-sectional view schematically showing an internal combustion engine **100** in an embodiment according to the present invention.
[FIG. **2**] FIG. **2(a)** is a plan view schematically showing a piston **40** included in the internal combustion engine **100,** FIG. **2(b)** and FIG. **2(c)** are each a side view schematically showing the piston **40,** and FIG. **2(d)** is a bottom view schematically showing the piston **40.**
[FIG. **3**] FIG. **3** is a cross-sectional view schematically showing a piston ring **43a** (or **43b, 43c**) included in the piston **40.**
[FIG. **4**] FIG. **4** shows a cross-sectional structure of a piston skirt **42** included in the piston **40,** and is a cross-sectional view taken along line **4A-4A'** in FIG. **2(c)****.**
[FIG. **5**] FIG. **5(a)** and FIG. **5(b)** are each a side view showing an example of positional arrangement of a resin layer **r1** in a slidable portion **sp** of the piston skirt **42.**
[FIG. **6**] FIG. **6(a)** and FIG. **6(b)** are each a schematic cross-sectional view of the internal combustion engine **100;** FIG. **6(a)** shows a state where the piston **40** is at a position immediately before a top dead center, and FIG. **6(b)** shows a state where the piston **40** is at a position immediately after the top dead center.
[FIG. **7**] FIG. **7** is a cross-sectional view schematically showing another structure of the internal combustion engine **100.**
[FIG. **8**] FIG. **8** is a side view schematically showing a straddled vehicle (motorcycle) **200** including the internal combustion engine **100.**

### DETAILED DESCRIPTION

Hereinafter, an embodiment of the present invention will be described with reference to the drawings. The present invention is not limited to the following embodiment.

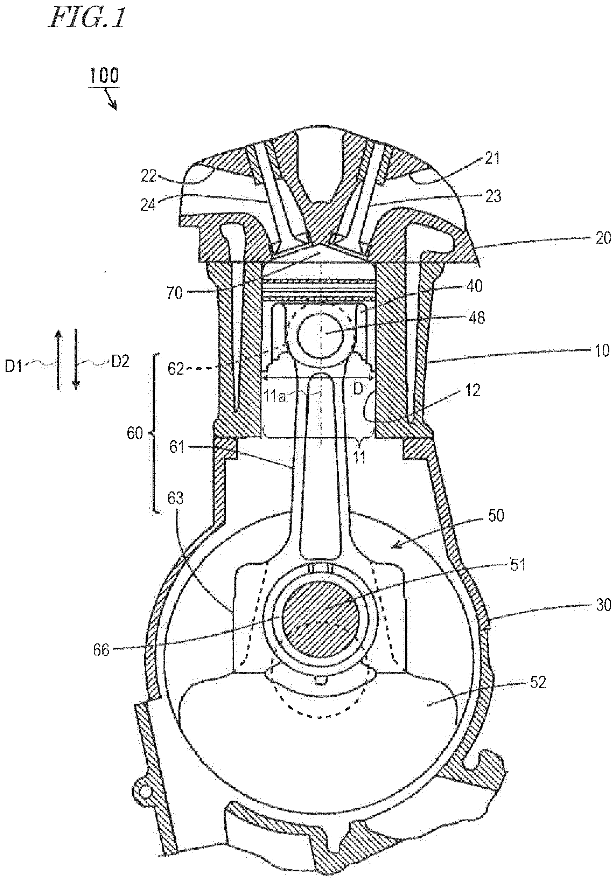

FIG. **1** shows an internal combustion engine **100** in an embodiment according to the present invention. FIG. **1** is a cross-sectional view schematically showing the internal combustion engine **100.**

As shown in FIG. **1****,** the internal combustion engine **100** includes a cylinder (cylinder block) **10,** a cylinder head **20,** and a crankcase **30.** The internal combustion engine **100** also includes a piston **40,** a crankshaft **50,** and a connecting rod **60.**

The cylinder **10** includes a cylinder wall **12** that demarcates a cylinder bore **11.** In this specification, two directions **D1** and **D2** parallel to a cylinder axial line **11a** (central line of the cylinder bore **11**) will be respectively referred to as a "first direction" and a "second direction". The first direction **D1** is a direction directed from the crankcase **30** side toward the cylinder head **20** side (direction directed from the bottom side to the top side in the figure), and the second direction **D2** is a direction directed from the cylinder head **20** side toward the crankcase **30** side (direction directed from the top side to the bottom side in the figure). Namely, the second direction **D2** is opposite to the first direction **D1.** The cylinder **10** is formed of a metal material (e.g., an aluminum alloy or cast iron).

The cylinder head **20** is provided an end, of the cylinder bore **11,** toward which the first direction **D1** is directed. The cylinder head **20** demarcates a combustion chamber **70** together with the cylinder wall **12** and the piston **40.** The cylinder head **20** includes an intake port **21** through which fuel is introduced into the combustion chamber **70** and an exhaust port **22** through which exhaust gas is discharged from the combustion chamber **70.** An intake valve **23** is provided in the intake port **21,** and an exhaust valve **24** is provided in the exhaust port **22.**

The crankcase **30** is located on the opposite side to the cylinder head **20** with respect to the cylinder **10.** The crankcase **30** may be separate from the cylinder **10** or integral with the cylinder **10.**

The piston **40** is accommodated in the cylinder bore **11.** The piston **40** is provided to be operable in the cylinder bore **11** reciprocally in the first direction **D1** and in the second direction **D2.** The piston **40** is formed of a metal material (e.g., an aluminum alloy).

The crankshaft **50** is accommodated in the crankcase **30.** The crankshaft **50** includes a crankpin **51** and a crank arm **52.**

The connecting rod **60** includes a rod-shaped rod main body **61,** a small end portion provided at one of two ends of the rod main body **60,** and a large end portion **63** provided at the other end of the rod main body **60.** The connecting rod **60** couples the piston **40** and the crankshaft **50** to each other. Specifically, a piston pin **48** of the piston **40** is inserted into a through-hole (piston pin hole) in the small end portion **62,** and the crankpin **51** of the crankshaft **50** is inserted into a through-hole (crankpin hole) in the large end portion **63.** This structure couples the piston **40** and the crankshaft **50** to each other. A bearing **66** is provided between an inner circumferential surface of the large end portion **63** and the crankpin **51.**

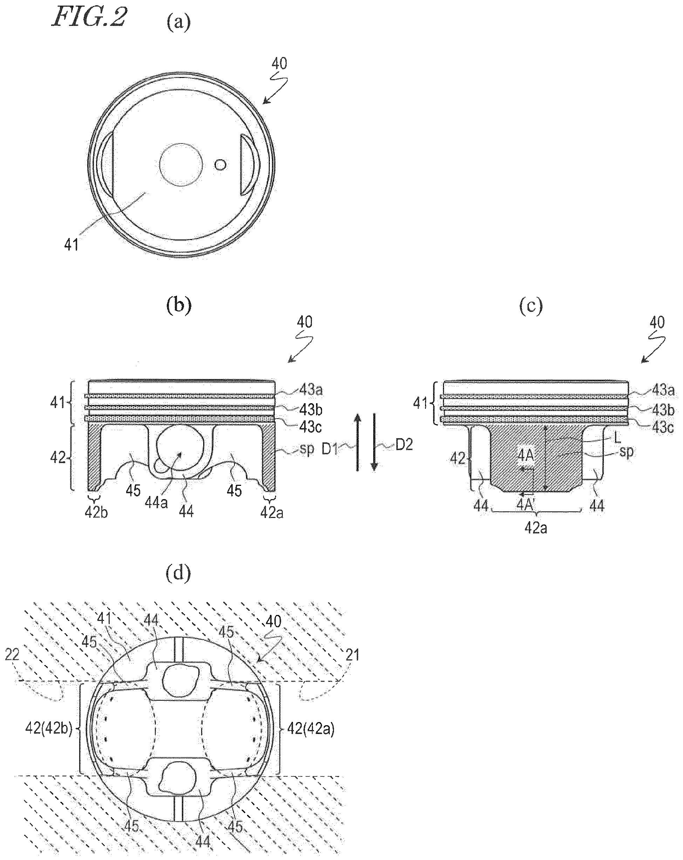

Now, with reference to FIG. **2(a)** through FIG. **2(d)****,** a structure of the piston **40** included in the internal combustion engine **100** will be described more specifically. FIG. **2(a)** is a plan view schematically showing the piston **40.** FIG. **2(b)** and FIG. **2(c)** are each a side view schematically showing the piston **40.** FIG. **2(b)** is a view of the piston **40** as seen in an axial direction of the piston pin **48** (see FIG. **1**) (hereinafter, the axial direction of the piston pin **48** will be referred to as a "piston pin axial direction"). FIG. **2(c)** is a view of the piston **40** as seen in a direction perpendicular to the piston pin axial direction. FIG. **2(d)** is a bottom view schematically showing the piston **40.**

As shown in FIG. **2(a)** through FIG. **2(d)****,** the piston **40** includes a piston head **41,** a piston skirt **42,** and piston rings **43a, 43b** and **43c.** The piston **40** also includes a pair of piston bosses **44** having a piston pin hole **44a** into which the piston pin **48** (see FIG. **1**) is insertable, and a rib **45** that couples the piston pin bosses **44** and the piston skirt **42** to each other.

The piston head **41** demarcates an end, of the combustion chamber **70,** toward which the second direction **D2** is directed. An outer circumference of the piston head **41** has ring grooves formed therein. The ring grooves hold the piston rings **43a, 43b** and **43c.**

The piston skirt **42** extends in the second direction **D2** along the cylinder wall **12** from the outer circumference of the piston head **41.** The piston skirt **42** includes a slidable portion (slidable surface) **sp** slidable against the cylinder wall **12.**

The piston skirt **42** includes two portions **42a** and **42b** located so as to have the cylinder axial line **11a** therebetween in a diametrical direction. As shown in FIG. **2(d)****,** one of the two portions **42a** and **42b,** for example, the portion **42a** (hereinafter, referred to as a "first skirt portion"), overlaps the intake port **21** at least partially as seen in the first direction **D1.** The other of the two portions **42a** and **42b,** for example, the portion **42b** (hereinafter, referred to as a "second skirt portion"), overlaps the exhaust port **22** at least partially as seen in the first direction **D1.**

The piston rings **43a, 43b** and **43c** are attached to the outer circumference of the piston head **41.** In this example, the piston **40** includes the three piston rings **43a, 43b** and **43c.** The number of the piston rings is not limited to three. Among the three piston rings **43a, 43b** and **43c,** the top and middle piston rings (top ring and second ring) **43a** and **43b,** for example, are compression rings that keep the air-tightness of the combustion chamber **70.** The bottom piston ring (third ring) **43c** is an oil ring that scrapes off extra oil attached to the cylinder wall **12.**

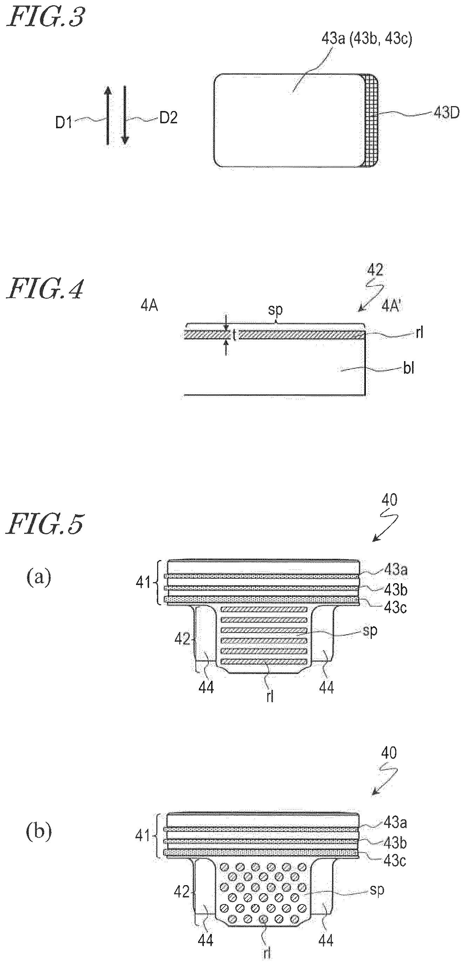

The piston rings **43a, 43b** and **43c** are formed of a metal material (e.g., steel). As shown in FIG. **3****,** at least one of the piston rings **43a, 43b** and **43c** (e.g. , the top ring **43a** and the third ring **43c**) has a diamond-like carbon layer (hereinafter, referred to as a "DLC layer") **43D** provided on an outer circumference (outer circumferential surface) thereof. The outer circumference of each of the piston rings **43a, 43b** and **43c** is a portion that comes into contact with the cylinder wall **12** to transmit the heat of the piston **40** to the cylinder wall **12.** FIG. **3** is a schematic cross-sectional view of the piston ring **43a** (or **43b, 43c**). The DLC layer **43D** is preferably formed by vapor deposition (e.g., CVD or PVD). There is no specific limitation on the composition or the thickness of the DLC layer **43D.** From the point of view of preventing scuff more certainly, the thickness of the DLC layer **43D** is preferably 2 µm or greater. From the point of view of adhesiveness, the thickness of the DLC layer **43D** is preferably 20 µm or less.

In this embodiment, the slidable portion **sp** of the piston skirt **42** includes a resin layer in at least a part thereof. In FIG. **2(b)** and FIG. **2(c)****,** an area where the resin layer is provided is hatched. In the example shown in FIG. **2(b)** and FIG. **2(c)****,** the resin layer is provided in substantially the entirety of the slidable portion **sp.** The resin layer prevents the heat of the piston **40** from being transmitted from the piston skirt **42** to the cylinder wall **12.**

FIG. **4** shows a cross-sectional structure of the piston skirt **42.** FIG. **4** is a cross-sectional view taken along line **4A-4A'** in FIG. **2(c)****.** As shown in FIG. **4****,** the resin layer **r1** is provided on a substrate **b1** formed of a metal material. The resin layer **r1** contains, for example, a polymer matrix and solid lubricative particles dispersed in the polymer matrix. As a material of the polymer matrix, thermosetting polyamideimide, for example, is preferably usable. Needless to say, the material of the polymer matrix is not limited to this. As the solid lubricative particles, any of various known types of solid lubricative particles are usable. For example, graphite particles or molybdenum particles are preferably usable. The resin layer **r1** may be formed by, for example, applying a liquid resin material to the piston skirt **42** by a spray method or any of various printing methods (screen printing, pad printing, etc.).

As described above, in the case where the piston ring has the DLC layer provided on the outer circumference thereof, the heat is not easily transmitted from the piston ring to the cylinder wall. Therefore, immediately after the internal combustion engine is started, the temperature difference between the piston head directly exposed to the combustion gas and the piston skirt located away from the combustion gas is made large. In this state, the amount of deformation of the piston skirt is made smaller than that of the piston head. As a result, the piston is not put into an ideal shape that is designed with an assumption that normal driving is performed. Thus, the gap between the piston skirt and the cylinder wall does not have an appropriate size designed with an assumption that normal driving is performed.

By contrast, in the internal combustion engine **100** in an embodiment according to the present invention, the slidable portion **sp** of the piston skirt **42** has the resin layer **r1** in at least a part thereof as described above. Therefore, the heat transmission from the piston skirt **42** to the cylinder wall **12** is prevented by the resin layer **r1.** Thus, the heat of the piston skirt **42** is not easily transmitted to the cylinder wall **12** and is likely to stay in the piston skirt **42** (namely, the heat preservability of the piston skirt **42** is raised). This causes the temperature of the piston skirt **42** to be raised more quickly than in the case where the slidable portion **sp** does not include the resin layer **r1.** This results in a smaller temperature difference between the piston head **41** and the piston skirt **42.** The temperature distribution in the piston **40** is made close to the temperature distribution at the time of normal driving, relatively quickly after the internal combustion engine **100** is started. Consequently, the gap between the piston skirt **42** and the cylinder wall **12** is made to have an appropriate size, relatively quickly after the internal combustion engine **100** is started. This allows noise, generated immediately after the internal combustion engine **100** is started, to be suppressed quickly, and also prevents abrasion or cohesion of the piston **40** and the cylinder wall **12.**

According to the technological common knowledge (common conception of a person of ordinary skill in the art), in the case where the temperature difference between the piston head and the piston skirt is made large, the piston head is cooled. Specifically, oil is splashed toward a rear surface of the piston head to cool the piston head, so that the temperature difference between the piston head and the piston skirt is decreased. However, immediately after the internal combustion engine is started, the oil has a low temperature and a high viscosity. Therefore, an attempt to decrease the temperature difference between the piston head and the piston skirt by the above-described technique results in the load on the oil pump being increased. This may undesirably increase the production cost incurred by an increase in the capacity of the oil pump, enlarge the internal combustion engine, or decrease the amount of oil supplied to the slidable portions of bearings and cams. By contrast, the embodiment of the present invention is based on a technological idea totally different from the common conception of cooling the piston head, and is to decrease the temperature difference between the piston head **41** and the piston skirt **42** by raising the heat preservability of the piston skirt **42.** Therefore, the load on the oil pump is not increased, and a sufficient amount of oil is supplied to the other slidable portions.

In the example shown in FIG. **2(b)** and FIG. **2(c)****,** the resin layer **r1** is provided in substantially the entirety of the slidable portion **sp** of the piston skirt **42.** The layer **r1** does not need to be provided in substantially the entirety of the slidable portion **sp,** and may be provided in a part of the slidable portion **sp** or may be provided to have a predetermined pattern.

The resin layer **r1** may have a different area size in the first skirt portion **42a** from in the second skirt portion **42b.** Immediately after the internal combustion engine **100** is started, the exhaust port **22** has the combustion gas pass therethrough and thus has a high temperature, whereas the intake port **21** has pre-combustion gas pass therethrough and thus is kept at a relatively low temperature. Therefore, in the cylinder **10,** immediately after the internal combustion engine **100** is started, the intake port **21** side is likely to be lower in the temperature than the exhaust port **22** side. As a result, in the case where the resin layer **r1** has the same area size in the first skirt portion **42a** as in the second skirt portion **42b,** the heat of the piston **40** easily escapes from the first skirt portion **42a**. By contrast, in the case where the resin layer **r1** has a larger area size in the first skirt portion (skirt portion overlapping the intake port **21** at least partially) **42a** than in the second skirt portion (skirt portion overlapping the exhaust port **22** at least partially) **42b,** the heat of the piston **40** is preserved more uniformly in a circumferential direction of the piston **40.**

From the point of view of sufficiently raising the heat preservability of the piston skirt **42,** it is preferable that the resin layer **r1** is provided in the slidable portion **sp** of the piston skirt **42** in as large an area as possible. From the point of view of further raising the heat preservability of the piston skirt **42,** it is preferable that the resin layer **r1** is provided in substantially the entirety of the slidable portion **sp** of the piston skirt **42.**

FIG. **5(a)** and FIG. **5(b)** each show another example of positional arrangement of the resin layer **r1** in the slidable portion **sp** of the piston skirt **42.**

In the examples shown in FIG. **5(a)** and FIG. **5(b)**, the resin layer **r1** is provided in a part of the slidable portion **sp.** Namely, the slidable portion **sp** includes an area where the resin layer **r1** is not provided. More specifically, in the example shown in FIG. **5(a)**, the resin layer **r1** is provided in a plurality of bands (lines) extending in the circumferential direction. In the example shown in FIG. **5(b)**, the resin layer **r1** is provided in a plurality of dots.

In the case where the positional arrangement shown in FIG. **5(a)** or FIG. **5(b)** is adopted also, the effect is provided that the noise generated immediately after the start of the internal combustion engine **100** is suppressed quickly and that abrasion or cohesion of the piston **40** and of the cylinder wall **12** is suppressed.

There is no limitation on thickness **t** (see FIG. **4**) of the resin layer **r1.** From the point of view of sufficiently raising the heat preservability of the piston skirt **42,** the thickness **t** of the resin layer **r1** is preferably 15 µm or greater. However, in the case where the thickness **t** of the resin layer **r1** exceeds 30 µm, it may be difficult to form the resin layer **r1** by a simple method. Therefore, from the point of view of forming the resin layer **r1** easily, the thickness **t** of the resin layer **r1** is preferably 30 µm or less.

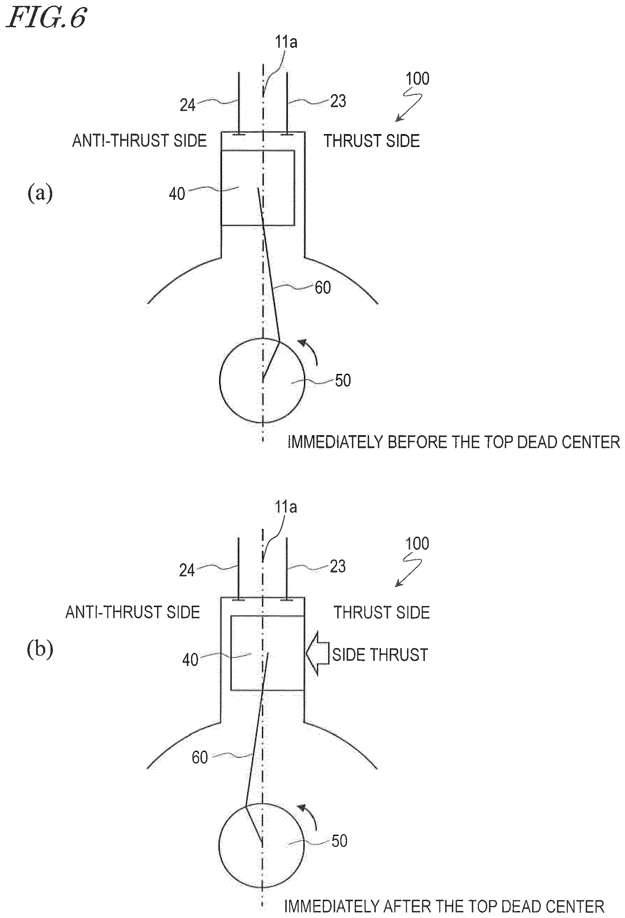

Now, with reference to FIG. **6(a)** and FIG. **6(b)****,** "thrust side" and "anti-thrust side" in the internal combustion engine **100** will be described. FIG. **6(a)** and FIG. **6(b)** are each a schematic cross-sectional view of the internal combustion engine **100.** In FIG. **6(a)** and FIG. **6(b)****,** the crankshaft **50** rotates counterclockwise. FIG. **6(a)** shows a state where the piston **40** is at a position immediately before a top dead center, and FIG. **6 (b)** shows a state where the piston **40** is at a position immediately after the top dead center.

The piston **40** is pressed to the left side or the right side of the cylinder wall **12** in accordance with the relationship between the pressure received by the connecting rod **60** and the pressure received by the piston **40.** As shown in FIG. **6(a)**, while the piston **40** is raised toward the top dead center, the piston **40** is pressed to the left side of the cylinder wall **12.** By contrast, as shown in FIG. **6(b)****,** after the piston **40** passes the top dead center, the direction in which the connecting rod **60** is inclined is changed (when the piston **40** is at a position immediately before the top dead center, the connecting rod **60** is inclined such that the small end portion **62** is located to the left of the large end portion **63;** whereas when the piston **40** is at a position immediately after the top dead center, the connecting rod **60** is inclined such that the large end portion **63** is located to the left of the small end portion **62**). Therefore, the piston **40** is moved from the left to the right, and is pressed to the right side of the cylinder wall **12.** The right side, on which the piston **40** receives a thrust force (side thrust) from the cylinder wall **12** at this point, is referred to as the "thrust side", and the left side is referred to as the "anti-thrust side".

In the internal combustion engine **100** in this embodiment, the thrust side and the anti-thrust side are set such that the first skirt portion **42a** overlapping the intake port **21** is located on the thrust side whereas the second skirt portion **42b** overlapping the exhaust port **22** is located on the anti-thrust side. Needless to say, the setting of the thrust side and the anti-thrust side of the piston **40** is not limited to this example. The thrust side and the anti-thrust side of the piston **40** are determined by the rotation direction of the connecting rod **60** in an internal combustion engine.

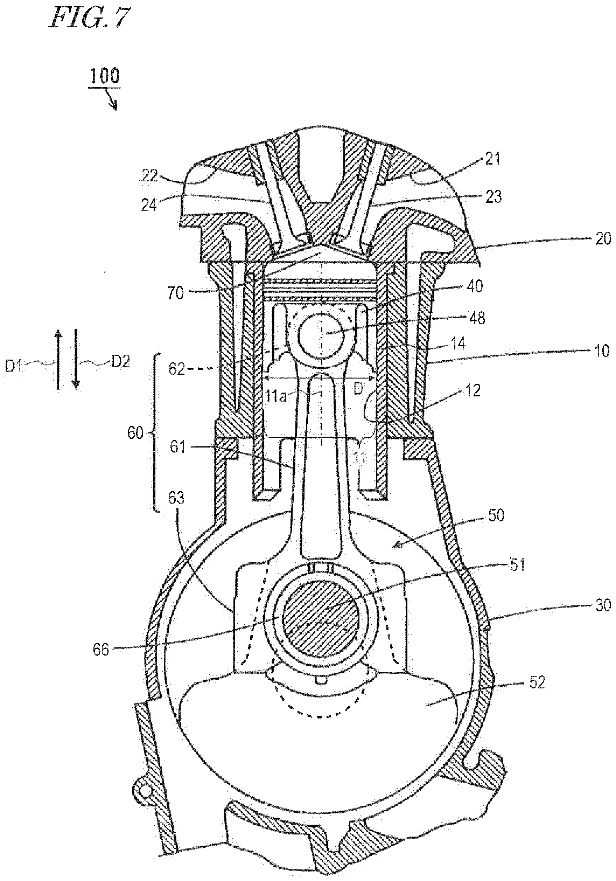

The cylinder **10** including the cylinder wall **12,** and the piston **40,** may be formed of the same metal material (e.g., aluminum alloy) or may be formed of different metal materials. In the example in FIG. **1****,** the cylinder **10** is sleeveless. Alternatively, as shown in FIG. **7****,** a sleeve (metal cylindrical member) **14** may be fit into the inside of the cylinder **10.** In this case, an inner circumferential surface of the sleeve **14** acts as the cylinder wall **12.** The sleeve **14** is formed of, for example, cast iron.

The internal combustion engine **100** in an embodiment according to the present invention is especially preferably usable for a scooter-type or underbone-type straddled vehicle, which often starts running immediately after the internal combustion engine is started. Such a straddled vehicle, which often starts running immediately after the internal combustion engine is started, conspicuously enjoys the effect of suppressing the generation of the noise, or abrasion or cohesion of the piston **40** and the cylinder wall **12,** in the case of using the internal combustion engine **100** in an embodiment according to the present invention.

In a straddled vehicle (of a scooter type or underbone type) which often starts running immediately after the internal combustion engine is started, length **L** (see FIG. **2(c)**) of the piston skirt **42** along the second direction **D2** and diameter **D** (see FIG. **1**) of the cylinder bore **11** often fulfill the relationship of L/D ≥ 0.3. This is for the purpose of further stabilizing the posture of the piston **40** to realize lower noise and higher durability. Therefore, the present invention is considered to provide large significance when being applied to the internal combustion engine **100** in which the length **L** of the piston skirt **42** along the second direction **D2** and the diameter **D** of the cylinder bore **11** fulfill the relationship of L/D ≥ 0.3.

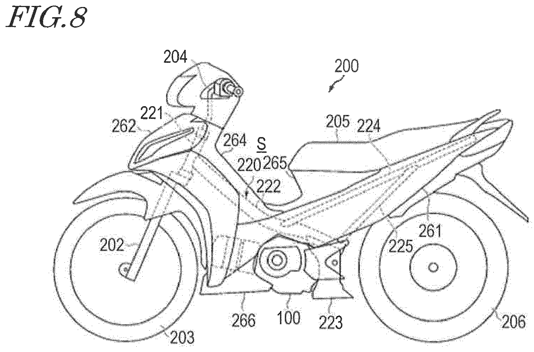

FIG. **8** shows a straddled vehicle **200** including the internal combustion engine **100** in an embodiment according to the present invention. The straddled vehicle **200** shown in FIG. **8** is an underbone-type motorcycle. FIG. **8** is a side view schematically showing the motorcycle **200.**

As shown in FIG. **8****,** a vehicle body frame **220** of the motorcycle **200** includes a head pipe **221** at a front end thereof. A steering shaft is inserted into the head pipe **221.** The steering shaft is rotatably supported. A bottom end of the steering shaft is coupled to a front folk **202.** A front wheel **203** is supported by a bottom end of the front folk **202.** A top end of the steering shaft is coupled to a steering **204.**

The vehicle body frame **220** includes a front frame portion **222** extending obliquely rearward and downward from the head pipe **221** and forming a front portion of the vehicle body frame **220.** The front frame portion **222** is located at the center of the motorcycle **200** in a vehicle width direction.

A seat **205** is located to the rear of the steering **204.** The seat **205** is a tandem seat. A rear portion of the seat **205** on which a passenger (not a driver) is to sit is higher than a front portion of the seat **205** on which a rider (driver) is to sit. As described above, the motorcycle **200** shown in FIG. **8** is of an underbone type, and a predetermined space **S** is formed above the front frame portion **222** and between the steering **204** and the seat **205.**

The internal combustion engine **100** is located below the front frame portion **222.** The vehicle body frame **220** includes a rear bracket **223** extending downward from a rear end of the front frame portion **222.** The rear bracket **223** is located to the rear of the engine **100.** The engine **100** is supported by the front frame portion **222** and the rear bracket **223.** A rear wheel **206** is located to the rear of the engine **100** and the rear bracket **223.** An axle of the rear wheel **206** is supported by a swing arm (not shown) extending rearward from the rear bracket **223.**

The vehicle body frame **220** also includes a pair of (left and right) rear frame portions **224.** A front end of each of the rear frame portions **224** is connected to a rear portion of the front frame portion **222.** The position at which each rear frame portion **224** is connected to the front frame portion **222** is above the crankcase **30** of the engine **100.** The rear frame portions **224** each extend obliquely rearward and upward from a front end thereof and form a rear portion of the vehicle body frame **220.** The vehicle body frame **220** includes a stay **225** extending from the rear end of the front frame portion **222** to a middle portion of each rear frame portion **224** and supporting the rear frame portions **224.**

A vehicle body cover of the motorcycle **200** includes a pair of side cover portions **261.** The vehicle body cover also includes a front cover portion **262,** a center cover portion **264,** a below-the-seat cover portion **265,** and a below-the-engine cover portion **266.**

The pair of side cover portions **261** are located along the rear frame portions **224** and cover outer sides of the rear frame portions **224** in the vehicle width direction. A top portion of the front cover portion **262** covers a front side of the head pipe **221.** Left and right side portions of the front cover portion **262** respectively cover left and right sides of a front portion of the vehicle body.

An uppermost portion of the center cover portion **264** covers a rear side of the head pipe **221.** The center cover portion **264** extends downward and rearward along the front frame portion **222** from the uppermost portion and covers a top side of the front frame portion **222.**

The below-the-seat cover portion **265** is located below the seat **205** and covers an accommodation box (not shown) located below the seat **205.** The below-the-engine cover portion **266** covers a front portion of the engine **100.**

The motorcycle **200** having the above-described structure includes the engine (internal combustion engine) **100** in an embodiment according to the present invention, and therefore quickly suppresses the noise generated immediately after the internal combustion engine **100** is started and prevents abrasion or cohesion of the piston **40** and the cylinder wall **12.**

The engine **100** in an embodiment according to the present invention may be included in a straddled vehicle other than the motorcycle described above as an example. In this specification, the "straddled vehicle" refers to any vehicle which a rider rides astride, and is not limited to a two-wheel vehicle. The straddled vehicle may be, for example, a three-wheel vehicle which changes the advancing direction by inclining the vehicle body, or may be another type of straddled vehicle such as an ATV (All Terrain Vehicle) or the like.

An embodiment according to the present invention suppresses a problem caused to an internal combustion engine, including a diamond-like carbon layer provided on an outer circumference of a piston ring, due to a gap between a piston skirt and a cylinder wall not having an appropriate size.

The present invention is preferably usable for an internal combustion engine for a straddled vehicle, and especially preferably usable for a scooter-type or underbone-type straddled vehicle.

## Claims

1. An internal combustion engine (100) for a straddled vehicle (200), comprising:
a cylinder (10) including a cylinder wall (12) demarcating a cylinder bore (11);
a piston (40) accommodated in the cylinder bore (11), the piston (40) reciprocally movable in a first direction and in a second direction opposite to the first direction, the first direction being parallel to a cylinder axial line; and
a cylinder head (20) provided at an end of the cylinder bore (11), toward which the first direction is directed, the cylinder head (20) demarcating a combustion chamber (70) together with the cylinder wall (12) and the piston (40);
wherein:
the piston (40) includes:
a piston head (41) demarcating an end of the combustion chamber (70), toward which the second direction is directed;
a piston ring (43a, 43b, 43c) attached to an outer circumference of the piston head (41), the piston ring (43a, 43b, 43c) including an outer circumference coming into contact with the cylinder wall (12) to transmit heat of the piston (40) to the cylinder wall (12); and
a piston skirt (42) including a slidable portion (sp) slidable against the cylinder wall (12), the piston skirt (42) extending in the second direction along the cylinder wall (12) from the outer circumference of the piston head (41);
the piston ring (43a, 43b, 43c) includes a diamond-like carbon layer (43D) on the outer circumference thereof; and **characterized in that** the slidable portion (sp) of the piston skirt (42) includes a resin layer in at least a part thereof, the resin layer preventing the heat of the piston (40) from being transmitted from the piston skirt (42) to the cylinder wall (12).

2. The internal combustion engine (100) for a straddled vehicle (200) according to claim 1, wherein:
the cylinder head (41) includes an intake port (21) through which fuel is introduced into the combustion chamber (70) and an exhaust port (22) through which exhaust gas is discharged from the combustion chamber (70);
the piston skirt (42) includes a fist skirt portion (42a) and a second skirt portion (42b) located so as to have the cylinder axial line therebetween in a diametrical direction;
the first skirt portion (42a) includes the resin layer and overlaps the intake port (21) at least partially as seen in the first direction;
the second skirt portion (42b) includes the resin layer and overlaps the exhaust port (22) at least partially as seen in the first direction; and
the resin layer has a larger area size in the first skirt portion (42a) than in the second skirt portion (42b).

3. The internal combustion engine (100) for a straddled vehicle (200) according to claim 1, wherein the resin layer is provided in substantially the entirety of the slidable portion (sp).

4. The internal combustion engine (100) for a straddled vehicle (200) according to any one of claims 1 through 3, wherein length L of the piston skirt (42) in the second direction and diameter D of the cylinder bore (11) fulfill the relationship of L/D ≥ 0.3.

5. The internal combustion engine (100) for a straddled vehicle (200) according to any one of claims 1 through 4, wherein the resin layer has a thickness of 15 µm or greater.

6. A straddled vehicle (200), comprising the internal combustion engine (100) according to any one of claims 1 through 5.

## Patentansprüche

1. Ein Verbrennungsmotor (100) für ein Grätsch-Fahrzeug (200), der folgende Merkmale aufweist:
einen Zylinder (10) mit einer Zylinderwand (12), die eine Zylinderbohrung (11) abgrenzt;
einen Kolben (40), der in der Zylinderbohrung (11) untergebracht ist, wobei der Kolben (40) in einer ersten Richtung und in einer zweiten Richtung, die entgegengesetzt zu der ersten Richtung ist, hin- und herbewegbar ist, wobei die erste Richtung parallel zu einer Zylinder-Axiallinie ist; und
einen Zylinderkopf (20), der an einem Ende der Zylinderbohrung (11) vorgesehen ist, in Richtung dessen die erste Richtung gerichtet ist, wobei der Zylinderkopf (20) zusammen mit der Zylinderwand (12) und dem Kolben (40) eine Verbrennungskammer (70) abgrenzt;
wobei:
der Kolben (40) folgende Merkmale aufweist:
einen Kolbenkopf (41), der ein Ende der Verbrennungskammer (70) abgrenzt, in Richtung dessen die zweite Richtung gerichtet ist;
einen Kolbenring (43a, 43b, 43c), der an einem Außenumfang des Kolbenknopfs (41) angebracht ist, wobei der Kolbenring (43a, 43b, 43c) einen Außenumfang aufweist, der mit der Zylinderwand (12) in Kontakt kommt, um Wärme des Kolbens (40) an die Zylinderwand (12) zu übertragen; und
einen Kolbenmantel (42), der einen gleitfähigen Abschnitt (sp) beinhaltet, der gegenüber der Zylinderwand (12) gleitfähig ist, wobei sich der Kolben mantel (42) von dem Außenumfang des Kolbenkopfs (41) in der zweiten Richtung entlang der Zylinderwand (12) erstreckt;
der Kolbenring (43a, 43b, 43c) eine diamantartige Kohlenstoffschicht (43D) an dem Außenumfang desselben aufweist; und
**dadurch gekennzeichnet, dass**:
der gleitfähige Abschnitt (sp) des Kolbenmantels (42) eine Harzschicht in zumindest einem Teil desselben aufweist, wobei die Harzschicht verhindert, dass die Wärme des Kolbens (40) von dem Kolbenmantel (42) an die Zylinderwand (12) übertragen wird.

2. Der Verbrennungsmotor (100) für ein Grätsch-Fahrzeug (200) gemäß Anspruch 1, bei dem:
der Zylinderkopf (41) eine Einlassöffnung (21), durch die Kraftstoff in die Verbrennungskammer (70) eingeführt wird, und eine Auslassöffnung (22) aufweist, durch die Abgas aus der Verbrennungskammer (70) abgegeben wird;
der Kolbenmantel (42) einen ersten Mantelabschnitt (42a) und einen zweiten Mantelabschnitt (42b) aufweist, die so angeordnet sind, dass sich die Zylinder-Axiallinie in einer diametralen Richtung zwischen denselben befindet;
der erste Mantelabschnitt (42a) die Harzschicht aufweist und die Einlassöffnung (21) bei Betrachtung in der ersten Richtung zumindest teilweise überlappt;
der zweite Mantelabschnitt (42b) die Harzschicht aufweist und die Auslassöffnung (22) bei Betrachtung in der ersten Richtung zumindest teilweise überlappt; und
die Harzschicht eine größere Fläche in dem ersten Mantelabschnitt (42a) als in dem zweiten Mantelabschnitt (42b) aufweist.

3. Der Verbrennungsmotor (100) für ein Grätsch-Fahrzeug (200) gemäß Anspruch 1, bei dem die Harzschicht in im Wesentlichen dem gesamten gleitfähigen Abschnitt (sp) vorgesehen ist.

4. Der Verbrennungsmotor (100) für ein Grätsch-Fahrzeug (200) gemäß einem der Ansprüche 1 bis 3, bei dem eine Länge L des Kolbenmantels (42) in der zweiten Richtung und ein Durchmesser D der Zylinderbohrung (11) die Beziehung L/D ≥ 0,3 erfüllen.

5. Der Verbrennungsmotor (100) für ein Grätsch-Fahrzeug (200) gemäß einem der Ansprüche 1 bis 4, bei dem die Harzschicht eine Dicke von 15 µ oder mehr aufweist.

6. Ein Grätsch-Fahrzeug (200) mit dem Verbrennungsmotor (100) gemäß einem der Ansprüche 1 bis 5.

## Revendications

1. Moteur à combustion interne (100) pour véhicule à califourchon (200), comprenant:
un cylindre (10) comportant une paroi de cylindre (12) délimitant un alésage de cylindre (11);
un piston (40) logé dans l'alésage de cylindre (11), le piston (40) pouvant se déplacer en va-et-vient dans une première direction et dans une deuxième direction opposée à la première direction, la première direction étant parallèle à une ligne axiale du cylindre; et
une tête de cylindre (20) prévue à une extrémité de l'alésage de cylindre (11) vers laquelle est orientée la première direction, la tête de cylindre (20) délimitant une chambre de combustion (70) ensemble avec la paroi de cylindre (12) et le piston (40);
dans lequel:
le piston (40) comporte:
une tête de piston (41) délimitant une extrémité de la chambre de combustion (70) vers laquelle est orientée la deuxième direction;
une bague de piston (43a, 43b, 43c) fixée à une circonférence extérieure de la tête de piston (41), la bague de piston (43a, 43b, 43c) comportant une circonférence extérieure entrant en contact avec la paroi de cylindre (12) pour transmettre la chaleur du piston (40) à la paroi de cylindre (12); et
une jupe de piston (42) comportant une partie coulissante (sp) pouvant coulisser contre la paroi de cylindre (12), la jupe de piston (42) s'étendant dans la deuxième direction le long de la paroi de cylindre (12) à partir de la circonférence extérieure de la tête de piston (41);
la bague de piston (43a, 43b, 43c) comporte une couche de carbone de type diamant (43D) sur sa circonférence extérieure; et
**caractérisé par le fait que**
la partie coulissante (sp) de la jupe de piston (42) comporte une couche de résine dans au moins une partie de cette dernière, la couche de résine empêchant que la chaleur du piston (40) ne soit transmise de la jupe de piston (42) à la paroi de cylindre (12).

2. Moteur à combustion interne (100) pour véhicule à califourchon (200) selon la revendication 1, dans lequel:
la tête de cylindre (41) comporte un orifice d'admission (21) à travers lequel du carburant est introduit dans la chambre de combustion (70) et un orifice d'échappement (22) à travers lequel des gaz d'échappement sont évacués de la chambre de combustion (70);
la jupe de piston (42) comporte une première partie de jupe (42a) et une deuxième partie de jupe (42b) situées de manière à présenter la ligne axiale du cylindre entre elles dans une direction diamétrale;
la première partie de jupe (42a) comporte la couche de résine et vient au moins partiellement en recouvrement avec l'orifice d'admission (21), tel que vu dans la première direction;
la deuxième partie de jupe (42b) comporte la couche de résine et vient au moins partiellement en recouvrement avec l'orifice d'échappement (22), tel que vu dans la première direction; et
la couche de résine présente une plus grande superficie dans la première partie de jupe (42a) que dans la deuxième partie de jupe (42b).

3. Moteur à combustion interne (100) pour véhicule à califourchon (200) selon la revendication 1, dans lequel la couche de résine est prévue sensiblement dans toute la partie coulissante (sp).

4. Moteur à combustion interne (100) pour véhicule à califourchon (200) selon l'une quelconque des revendications 1 à 3, dans lequel la longueur L de la jupe de piston (42) dans la deuxième direction et le diamètre D de l'alésage de cylindre (11) remplissent le rapport L/D ≥ 0,3.

5. Moteur à combustion interne (100) pour véhicule à califourchon (200) selon l'une quelconque des revendications 1 à 4, dans lequel la couche de résine présente une épaisseur de 15 µm ou plus.

6. Véhicule à califourchon (200), comprenant le moteur à combustion interne (100) selon l'une quelconque des revendications 1 à 5.
